# EUROPÄISCHE PATENTANMELDUNG

(11) **EP 4 850 865 A1**
(43) Veröffentlichungstag der Anmeldung: **09.12.2026**
(21) Anmeldenummer: 26182666.3
(22) Anmeldetag: 02.06.2026
(51) Int. Cl.: B25J 9/00

(54) **INDUSTRIEROBOTER**

(30) Priorität: 05.06.2025 DE 102025122057
(71) Anmelder: autonox Robotics GmbH, 77731 Willstätt (DE)
(72) Erfinder: Haas, Guillaume, 67150 Gerstheim (FR); Stocker, Tim, 77749 Hohberg-Hofweier (DE); Perl, Kurt, 83253 Rimsting (DE); Martl, Andreas, 83104 Tuntenhausen (DE); Kirschner, Peter, 83556 Griesstätt (DE); Reichert, Christian, 83109 Großkarolinenfeld (DE)
(74) Vertreter: Geitz Patentanwälte PartG mbB

(57) **Zusammenfassung**

Es wird ein Industrieroboter (1) mit einer seriellen Kinematik, welche für eine große Traglast ausgebildet ist, vorgeschlagen, wobei der Industrieroboter (1) ausgestattet ist mit einem Grundgestell (2), einem Karussell (3), einer Schwinge (6), einem Armausleger (10) und mit einer Transporteinrichtung (22, 29) für den Industrieroboter (1), welche mehrere Gabel-Aufnahmen (24, 34) für eine Gabel (38) eines Flurförderzeugs (35) aufweist. Das Grundgestell (2) ist mit mehreren Transporteinrichtungs-Aufnahmen (18, 28) ausgestattet, welche ausgebildet sind, die Transporteinrichtung (22, 29) mittels mindestens einer Befestigungseinrichtung (27) lösbar an dem Grundgestell (2) zu befestigen. Die Gabel-Aufnahmen (24, 34) der an dem Grundgestell (2) befestigten Transporteinrichtung (22, 29) sind derart ausgerichtet, dass die Transporteinrichtung (22, 29) von mindestens zwei Seiten mit dem Flurförderzeug (35) aufnehmbar ist und die zwei Seiten unter einem Winkel von mehr als 0° und weniger als 180°, bevorzugt unter einem Winkel von 90°, zueinander ausgerichtet sind.

## Beschreibung

Die Erfindung geht aus von einem Industrieroboter mit einer seriellen Kinematik, welche für eine große Traglast ausgebildet ist.

Derartige Industrieroboter dienen zum Positionieren und Bewegen eines Manipulators oder Endeffektors in mindestens zwei Dimensionen im Raum. Die Kinematik umfasst eine Roboterbasis, welche auch als Grundgestell bezeichnet wird, ein Karussell, eine Schwinge und einen Armausleger, an welchem eine Effektorhalterung zur Aufnahme des Endeffektors aufgenommen ist. Die Effektorhalterung wird auch als Effektorträger bezeichnet. Der Effektorträger kann fester Bestandteil des Industrieroboters sein und zusammen mit dem Industrieroboter an einen Kunden ausgeliefert werden. Alternativ dazu kann der Industrieroboter ohne Effektorträger an einen Anwender ausgegeben werden, wobei der Anwender selbst den Industrieroboter mit einem an seine Anforderungen angepassten Effektorträger mit Effektor ausstattet. Der Endeffektor bildet das letzte Element der kinematischen Kette, welche das Karussell, die Schwinge und den Armausleger umfasst. Der Endeffektor wird auch als Manipulator bezeichnet, der die physikalische Interaktion mit der Umgebung des Industrieroboters ausführt. Als Endeffektor oder Manipulator wird beispielsweise ein Greifer oder ein Werkzeug eingesetzt, welche die Stückgüter insbesondere aufnehmen und umsetzen. Die Bewegung der Effektorhalterung relativ zu der Roboterbasis erfolgt mittels der Kinematik. Hierzu sind mehrere Antriebe vorgesehen: ein erster Antrieb, der das Karussell um eine erste geometrische Antriebsachse relativ zu der Roboterbasis dreht, ein zweiter Antrieb, der die Schwinge um eine zweite geometrische Antriebsachse relativ zu dem Karussell dreht, ein dritter Antrieb, der den Armausleger um eine dritte geometrische Antriebsachse relativ zu der Schwinge dreht. Die drei Achsen, welche für eine Bewegung des Karussells, der Schwinge und des Armauslegers sorgen, werden auch als Hauptachsen bezeichnet. Weitere Antriebe dienen dazu, die an dem Armausleger aufgenommene Effektorhalterung und den an der Effektorhalterung aufgenommenen Endeffektor um weitere geometrische Achsen zu bewegen. Die zugehörigen Achsen werden in Unterscheidung zu den Hauptachsen als Handachsen bezeichnet. Die Positionierung der Effektorhalterung mit einem daran angeordneten Endeffektor im Raum erfolgt mittels des Karussells, der Schwinge und des Armauslegers und den zugehörigen Hauptachsen. Eine Bewegung der Effektorhalterung relativ zu dem Armausleger sowie eine Bewegung des Endeffektors oder Teile des Endeffektors relativ zur Effektorhalterung erfolgt mittels mindestens einer Handachse. Hierzu zählt beispielsweise eine Drehung der Effektorhalterung oder das Öffnen und Schließen eines als Greifer ausgebildeten Endeffektors. Da die Hauptachsen eine erste Achse, eine zweite Achse und eine dritte Achse umfassen, werden die Handachsen auch als vierte, fünfte und sechste Achse bezeichnet.

Industrieroboter mit serieller Kinematik werden auch als Knickarmroboter bezeichnet.

Industrieroboter, welche für eine hohe Traglast ausgelegt sind, werden beispielsweise zur Handhabung von Stückgütern mit großem Eigengewicht eingesetzt. Hierzu zählen zum Beispiel Verpackungs- oder Palettieranlagen zum Stapeln und Palettieren von Objekten wie Paketen oder Gebinden mit mehreren Artikeln. Je nach Anwendung kann die Traglast beispielsweise mehr als 100kg, mehr als 200kg oder sogar mehr als 800kg betragen. Kinematiken, die für eine entsprechend hohe Traglast ausgelegt sind, müssen eine hohe Stabilität aufweisen, was wiederum ein hohes Eigengewicht und eine gewisse Größe zur Folge hat. Das Gewicht und die Größe führen dazu, dass der Transport und das Aufstellen des Industrieroboters an seinem Einsatzort erschwert ist. Die Anordnung auf standardisierten Paletten und in standardisierten Versandcontainern ist nicht ohne weiteres möglich, weshalb häufig Spezialanfertigungen notwendig sind. Die Notwendigkeit von Sondertransporten mit speziellen Verpackungen führen zu hohen Kosten. Um den Industrieroboter mit standardisierten Versandcontainern zu transportieren, können zwar einzelne Komponenten der Kinematik demontiert werden, jedoch werden für die demontierten Komponenten wiederum besondere Verpackungen oder Hilfsmittel benötigt, um eine Beschädigung beim Transport zu vermeiden und eine zuverlässige Installation des Industrieroboters am Einsatzort zu gewährleisten. Darüber hinaus ist das Umsetzen derartiger Industrieroboter mit einem Gabelstapler oder einem Kran erschwert, da die Kopplung der Kinematik an den Gabelstapler oder den Kran nicht ohne weiteres möglich ist, ohne den Industrieroboter dabei zu beschädigen und ohne das Absetzen des Industrieroboters zu behindern oder zu beeinträchtigen.

Der Erfindung liegt die Aufgabe zugrunde, einen Industrieroboter mit einer seriellen Kinematik, welche für eine große Traglast ausgebildet ist, zur Verfügung zu stellen, welcher mit einem Flurförderzeug aufgenommen und umgesetzt werden kann, so dass der Transport des Industrieroboters sowie das Aufstellen und die Inbetriebnahme erleichtert sind, effizient ablaufen und so zuverlässig erfolgen, dass eine Beschädigung des Industrieroboters vermieden wird.

Diese Aufgabe wird durch den Industrieroboter mit den Merkmalen des Anspruchs 1 gelöst. Der Industrieroboter zeichnet sich dadurch aus, dass eine Transporteinrichtung vorgesehen ist, welche an dem Grundgestell des Industrieroboters für den Transport und die Aufstellung am Einsatzort lösbar befestigt wird. Die Transporteinrichtung ist so ausgebildet, dass sie einerseits die Aufnahme des Industrieroboters mit einem Transportfahrzeug, insbesondere einem Flurförderzeug, erleichtert und andererseits den Industrieroboter schützt. Hierzu ist die Transporteinrichtung mit Gabel-Aufnahmen ausgestattet, in die die Gabel eines Flurförderzeugs, insbesondere eines Gabelstaplers oder Hubstaplers eingeführt werden kann. Dadurch wird der Industrieroboter an dem Flurförderzeug sicher gehalten. Da das Flurförderzeug nicht unmittelbar an einer der Komponenten der Kinematik des Industrieroboters angreift, wird eine Beschädigung des Industrieroboters durch das Flurförderzeug vermieden.

Flurförderzeuge werden auch als Flurfördergeräte bezeichnet. Sie sind ausgebildet, Güter zu ebener Erde in horizontaler Richtung zu transportieren, wobei die Güter zur Aufnahme mit dem Flurförderzeug angehoben werden. Zu den Flurförderzeugen zählen Gabelstapler, Hubstapler und Hubwägen. Diese sind mit einer Gabel mit mindestens zwei Zinken ausgestattet. Zur Aufnahme der Güter werden die Zinken der Gabel unter das betreffende Gut oder eine Palette, auf der sich das Gut befindet, geschoben. Anschließend wird die Gabel mit dem auf der Gabel unmittelbar oder mittelbar angeordneten Gut angehoben. Flurförderzeuge sind mit Rädern und mit einem Antrieb ausgestattet. Das Flurförderzeuge kann daher mit dem aufgenommenen Gut von einer ersten Position zu einer zweiten Position fahren und das Gut durch Absenken der Gabel dort absetzen.

Sobald der Industrieroboter an der für ihn vorgesehenen Position am Einsatzort aufgestellt ist, kann die Transporteinrichtung von dem Industrieroboter entfernt werden, ohne dass der Industrieroboter und die Transporteinrichtung dabei beschädigt oder beeinträchtigt werden. Die Transporteinrichtung ist zur mehrfachen Verwendung vorgesehen und geeignet. Hierzu ist das Grundgestell mit Aufnahmen ausgestattet, die im folgenden als Transporteinrichtungs-Aufnahmen bezeichnet werden. An diesen Transporteinrichtungs-Aufnahmen wird die Transporteinrichtung mittels einer Befestigungseinrichtung befestigt. Als Befestigungseinrichtung dienen beispielsweise eine oder mehrere Schrauben. Alternativ kann zum Beispiel auch ein Bajonett-Verschluss als Befestigungseinrichtung vorgesehen sein. Die Befestigung ist lösbar. Dies bedeutet, dass bei gelöster Befestigungseinrichtung die Transporteinrichtung von dem Grundgestell entfernt werden kann, ohne dass hierbei die Transporteinrichtung oder das Grundgestell zerstört oder beschädigt werden. Bevorzugt sind die Transporteinrichtungs-Aufnahmen so ausgebildet und an dem Grundgestell angeordnet, dass eine Transporteinrichtung bei mehreren verschiedenen Industrierobotern jeweils zum Transport eingesetzt werden kann. Dadurch können Kosten gesenkt und die Effizienz gesteigert werden.

Die Transporteinrichtung wird für den Transport an dem Industrieroboter befestigt. Sie verbleibt an dem Industrieroboter, bis dieser an seinem Einsatzort aufgestellt und installiert wird. Der mit der Transporteinrichtung ausgestattete Industrieroboter benötigt keine weitere Palette um beispielsweise in einem Versandcontainer aufgenommen und befestigt zu werden. Dies führt zu einem effizienten und sicheren Transport des Industrieroboters.

Die an dem Grundgestell angeordnete Transporteinrichtung weist mehrere Gabel-Aufnahmen für eine Gabel eines Flurförderzeugs, insbesondere eines Gabelstaplers oder Hubstaplers auf. Dabei sind die Gabel-Aufnahmen derart an dem Grundgestell ausgerichtet, dass der mit der Transporteinrichtung ausgestattete Industrieroboter von mindestens zwei Seiten, welche unter einem Winkel von mehr als 0° und weniger als 180° zueinander ausgerichtet sind, mit dem Flurförderzeug aufgenommenen werden kann. Bevorzugt sind die beiden Seiten unter einem Winkel von 90° zueinander ausgerichtet. Dies erleichtert es, den Industrieroboter mit einem Flurförderzeug umsetzen, beispielsweise in einem Versandcontainer anzuordnen oder aus diesem herauszuholen oder den Industrieroboter an seinem Einsatzort auf einem Sockel, beispielsweise mit Gestellfüßen, zu montieren. Die unter mindestens zwei verschiedenen Richtungen verlaufenden Gabel-Aufnahmen erlauben es, den Industrieroboter in der jeweils am besten geeigneten Ausrichtung mit dem Flurförderzeug aufzunehmen und abzusetzen. Vorteilhafterweise ermöglichen die Gabel-Aufnahmen den Einstich mit der Gabel von zwei einander entgegen gesetzten Richtungen. In diesem Fall ergeben sich aufgrund der beiden unter einem Winkel von mehr als 0° und weniger als 180° ausgerichteten Seiten Einstichmöglichkeiten für die Gabel von vier Seiten.

Bevorzugt sind bei der am Grundgestell befestigten Transporteinrichtung jeweils mindestens zwei Gabel-Aufnahmen räumlich getrennt voneinander und fluchtend angeordnet, so dass ein Zinken der Gabel eines Flurförderzeugs in diese mindestens zwei Gabel-Aufnahmen eingeführt werden kann. Für jeden Zinken der Gabel der Flurförderzeugs sind dabei jeweils mindestens zwei räumlich getrennte und fluchtend angeordnete Gabel-Aufnahmen der am Industrieroboter installierten Transporteinrichtung vorgesehen. Dadurch wird gewährleistet, dass der mit dem Flurförderzeug aufgenommene Industrieroboter nicht kippt.

Vorteilhafterweise ist der Industrieroboter steuerungsunabhängig ausgeführt. Er umfasst die mechanischen Komponenten und die zugehörigen Antriebe und kann an seinem Einsatzort in ein beliebiges Steuerungskonzept eingebunden werden. Dies führt dazu, dass er mit beliebigen Automatisierungskonzepten kompatibel ist. Auf eine Integration einer proprietären Robotersteuerung des Industrieroboters in eine aus unterschiedlichen Komponenten bestehende Umgebung mit einer bereits vorhandenen Steuerung kann verzichtet werden, was die Integration erheblich vereinfacht.

Nach einer vorteilhaften Ausgestaltung der Erfindung sind die Transporteinrichtungs-Aufnahmen als Sitzflächen ausgebildet, die sich in Richtung der ersten geometrischen Achse erstecken. Dabei sind die Sitzflächen seitlich an einer Außenseite des Grundgestells angeordnet. Dies führt dazu, dass die nach unten weisende Seite des Grundgestells frei ist. Ist an den Sitzflächen eine Transporteinrichtung befestigt und steht diese seitlich und nicht nach unten von dem Grundgestell ab, kann der Industrieroboter mit einem Flurförderzeug aufgenommen und an seinem Einsatzort auf für ihr vorgesehenen Gestellfüßen, einem Sockel oder einem Bodengestell von oben abgesetzt und installiert werden. Die Transporteinrichtung behindert damit das Aufstellen des Industrieroboters an seinem Einsatzort nicht. Sie muss erst von dem Industrieroboter gelöst werden, wenn dieser an seiner vorgesehenen Position steht.

Nach einer weiteren vorteilhaften Ausgestaltung der Erfindung sind die Sitzflächen an vier Außenseiten des Grundgestells angeordnet, von denen jeweils zwei Außenseiten parallel zueinander sind.

Nach einer weiteren vorteilhaften Ausgestaltung der Erfindung sind an jeder Außenseite mindestens zwei Sitzflächen angeordnet.

Nach einer weiteren vorteilhaften Ausgestaltung der Erfindung weist jede Sitzfläche mindestens eine Sitzflächen-Durchgangsöffnung auf, welche mindestens eine die Transporteinrichtung an dem Grundgestell befestigende Schraube aufnimmt.

Nach einer weiteren vorteilhaften Ausgestaltung der Erfindung umfasst die Transporteinrichtung mehrere Transportelemente, welche einzeln und unabhängig voneinander an dem Grundgestell befestigt werden können. Jedes Transportelement weist ein Befestigungsteil auf, welches mindestens einen plattenförmigen Abschnitt umfasst. Dieser plattenförmige Abschnitt liegt bei der Befestigung des Transportelements an dem Grundgestell an einer der Sitzflächen des Grundgestells an. Das Befestigungsteil weist mindestens eine Befestigungsteil-Durchgangsöffnung auf, welche mindestens eine in die Sitzflächen-Durchgangsöffnung eingesetzte und das Transportelement an dem Grundgestell befestigende Schraube aufnimmt. Jedes Transportelement weist ein an dem Befestigungsteil angeordnetes Gabel-Aufnahmeteil auf. Dabei stehen die Gabel-Aufnahmeteile eines an dem Grundgestell befestigten Transportelements bevorzugt seitlich oder nach oben von dem Grundstell ab. Sie behindern damit das Absetzen des Industrieroboters auf Gestellfüßen oder einem Sockel nicht. Die einzeln an dem Grundgestell befestigten Transportelemente haben den Vorteil, dass die Anzahl der für den Transport eingesetzten Transportelemente jeweils an die konkreten Anforderungen angepasst werden kann.

Nach einer weiteren vorteilhaften Ausgestaltung der Erfindung ist das Gabel-Aufnahmeteil als Vierkantrohr ausgebildet. Dieses Vierkantrohr kann einen rechteckigen oder auch quadratischen Querschnitt aufweisen. Der Querschnitt des durch das Vierkantrohr begrenzten Querschnitts ist dabei an den Querschnitt der Zinken eines Flurförderzeugs angepasst, so dass ein Zinken durch das Vierkantrohr hindurchgeführt werden kann.

Nach einer weiteren vorteilhaften Ausgestaltung der Erfindung umfassen die Transporteinrichtungs-Aufnahmen an dem Grundgestell mindestens eine Grundgestell-Durchgangsöffnung, welche sich parallel zur ersten geometrischen Achse erstreckt. Dabei nimmt die Grundgestell-Durchgangsöffnung mindestens eine die Transporteinrichtung an dem Grundgestell befestigende Schraube auf.

Nach einer weiteren vorteilhaften Ausgestaltung der Erfindung weist die Transporteinrichtung ein Transportgestell mit einem Rahmen auf. Bevorzugt sind an dem Rahmen mehrere Gabel-Aufnahmen angeordnet. Diese Gabel-Aufnahmen können insbesondere als Aussparungen in dem Rahmen ausgebildet sein. Sie können aber auch zusätzlich am Rahmen angeordnet sein.

Nach einer weiteren vorteilhaften Ausgestaltung der Erfindung ist das Transportgestell an der dem Grundgestell abgewandten Seite mit Profilen ausgestattet, die abgerundete Kanten aufweisen. Diese abgerundeten Kanten erleichtern das Ziehen oder Schieben des mit dem Transportgestell ausgestatteten Industrieroboters, beispielsweise wenn dieser in einen Versandcontainer geschoben oder aus einem Versandcontainer herausgezogen werden soll. Zum Schieben oder Ziehen kann der Industrieroboter an einem Kran eingehängt werden. Das Einhängen am Kran erfolgt bevorzugt durch entsprechende Aufnahmen für eine Krankette an der Transporteinrichtung. Sind hierzu spezielle Aufnahmen an der Transporteinrichtung angeordnet, werden diese als Kranketten-Aufnahmen bezeichnet. Alternativ kann die Krankette beispielsweise an den Gabel-Aufnahmen eingehängt werden.

Nach einer weiteren vorteilhaften Ausgestaltung der Erfindung steht das an dem Grundgestell befestigte Transportgestell seitlich über das Grundgestell über. Das Transportgestell schützt dadurch das Grundgestell.

Nach einer weiteren vorteilhaften Ausgestaltung der Erfindung steht das Transportgestell in Richtung der ersten geometrischen Achse über das Grundgestell weiter nach unten über als ein Antrieb, der das Karussell um die erste geometrische Achse antreibt. Dieser Antrieb wird auch als erster Antrieb bezeichnet. Das Transportgestell schützt damit diesen ersten Antrieb.

Nach einer weiteren vorteilhaften Ausgestaltung der Erfindung ist die Transporteinrichtung über die Befestigungseinrichtung derart lösbar mit dem Grundgestell verbunden, dass die Kinematik bei gelöster Befestigungseinrichtung am Stück von der Transporteinrichtung abnehmbar ist. Der Industrieroboter kann somit transportiert werden, ohne dass einzelne Komponenten demontiert werden müssen.

Nach einer weiteren vorteilhaften Ausgestaltung der Erfindung ist die Transporteinrichtung mit Kranketten-Aufnahmen ausgestattet, welche Ketten oder Seile einer Kranaufhängung aufnehmen. Dabei können die Gabel-Aufnahmen zugleich auch als Kranketten-Aufnahmen dienen. Alternativ können zusätzlich zu den Gabel-Aufnahmen gesonderte Kranketten-Aufnahmen zusätzlich an der Transporteinrichtung angeordnet sein.

Nach einer weiteren vorteilhaften Ausgestaltung der Erfindung ist die Kinematik mit einer zusätzlichen Kranketten-Aufnahme ausgestattet, welche als Kippschutz ausgebildet ist. Durch das Einhängen einer Krankette in der zusätzlichen Kranketten-Aufnahme wird verhindert, dass der an einem Kran aufgehängte Industrieroboter kippt. Er verbleibt damit in einer vorgegebenen Ausrichtung während des Transports mit dem Kran.

Nach einer weiteren vorteilhaften Ausgestaltung der Erfindung ist das Grundgestell mit Gestellfuß-Befestigungseinrichtungen ausgestattet, an welchen mindestens vier Gestellfüße jeweils einzeln oder in Kombination befestigbar sind. Die Gestellfüße werden an dem Grundgestell befestigt, um den Industrieroboter an seinem Einsatzort aufzustellen.

Nach einer weiteren vorteilhaften Ausgestaltung der Erfindung sind die Gestellfüße mit mindestens einer Bodenplatte ausgestattet. Dabei sind verschiedene Varianten möglich: an jedem Gestellfuß ist eine separate Bodenplatte angeordnet oder jeweils zwei Gestellfüße sind an einer gemeinsamen Bodenplatte angeordnet oder alle Gestellfüße sind an einer gemeinsamen Bodenplatte angeordnet. Die mindestens eine Bodenplatte liegt auf dem Boden auf und wird in dem Boden verankert. Alternativ wird die Bodenplatte auf einem Bodenrahmen befestigt, wobei der Bodenrahmen im Boden verankert wird.

Nach einer weiteren vorteilhaften Ausgestaltung der Erfindung sind die Bodenplatten über Ankerstangen in einem Untergrund festlegbar. Eine zuverlässige Verankerung im Boden ist aufgrund der Größe und des Gewichts des Industrieroboters notwendig.

Nach einer weiteren vorteilhaften Ausgestaltung der Erfindung ist mindestens eine Bodenplatte über ein L-förmiges Winkelstück und Ankerstangen in einem Untergrund festlegbar. Dabei ist die Bodenplatte mit dem L-förmigen Winkelstück verschraubt. Das L-förmige Winkelstück ist mit den Ankerstangen in dem Untergrund festgelegt. Sind bei dem Versuch der Befestigung der Bodenplatte auf dem Untergrund Fehlbohrungen oder misslungene Dübelverankerungen aufgetreten, kann mit einem L-förmigen Winkelstück oder mit mehreren L-förmigen Winkelstücken eine Verankerung vorgenommen werden, ohne dass der Industrieroboter hierzu versetzt werden muss. Fehlbohrungen oder misslungene Dübelverankerungen können somit schnell, einfach und kostengünstig korrigiert werden, ohne dass die Qualität der Verankerung dadurch leidet.

Nach einer weiteren vorteilhaften Ausgestaltung der Erfindung ist der Industrieroboter an einem Bodenrahmen befestigt, welcher an einem Untergrund verankert wird. Der Bodenrahmen verteilt die Gewichtskraft des Industrieroboters einschließlich der an dem Industrieroboter angeordneten Traglast auf eine durch die Größe des Bodenrahmens vorgegebene Fläche, welche größer ist als die Grundfläche des Grundgestells. Der Bodenrahmen ermöglicht die Verankerung des Industrieroboters auf einem Boden, der für eine Festlegung durch die Bodenplatte und Ankerstangen nicht die ausreichende Dicke aufweist. Dank des Bodenrahmens kann auf eine zusätzliche Betonplatte oder einen zusätzlichen Betonsockel verzichtet werden. Der Industrieroboter ist trotz seines hohen Eigengewichts und der von ihm aufzunehmenden hohen Traglast bei einer Bewegung der Schwinge und des Armauslegers durch den Bodenrahmen so sicher gehalten, dass er nicht umfallen oder umkippen kann.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung sind Ausführungsbeispiele des Erfindungsgegenstandes dargestellt. Es zeigen:
- Figur 1: Industrieroboter in Seitenansicht,
- Figur 2: Industrieroboter gemäß Figur 1 in einer perspektivischen Ansicht,
- Figur 3: Industrieroboter gemäß Figur 1 mit Transporteinrichtung,
- Figur 4: Transport des Industrieroboters gemäß Figur 1 mit einem Flurförderzeug in einen Versandcontainer,
- Figur 5: Transport des Industrieroboters gemäß Figur 1 durch Aufhängung an einer Krankette,
- Figur 6: Transport des Industrieroboters gemäß Figur 1 mit einem Flurförderzeug unter einer ersten Ausrichtung,
- Figur 7: Transport des Industrieroboters gemäß Figur 1 mit einem Flurförderzeug unter einer zweiten Ausrichtung,
- Figur 8: Industrieroboter gemäß Figur 1 mit Gestellfüßen und Bodenplatte,
- Figur 9: Befestigung der Gestellfüße an dem Industrieroboter in einer Ansicht auf das Grundgestell von unten,
- Figur 10: Befestigung der Gestellfüße an dem Industrieroboter in einer Ansicht auf das Grundgestell von oben,
- Figur 11: Gestellfüße mit einer gemeinsamen Bodenplatte,
- Figur 12: Gestellfüße mit zwei Bodenplatten,
- Figur 13: Gestellfüße mit vier Bodenplatten,
- Figur 14: Bodenplatte und L-förmiges Winkelstück,
- Figur 15: Industrieroboter gemäß Figur 1 mit Bodenrahmen,
- Figur 16: Bodenrahmen gemäß Figur 15.

### Beschreibung der Ausführungsbeispiele

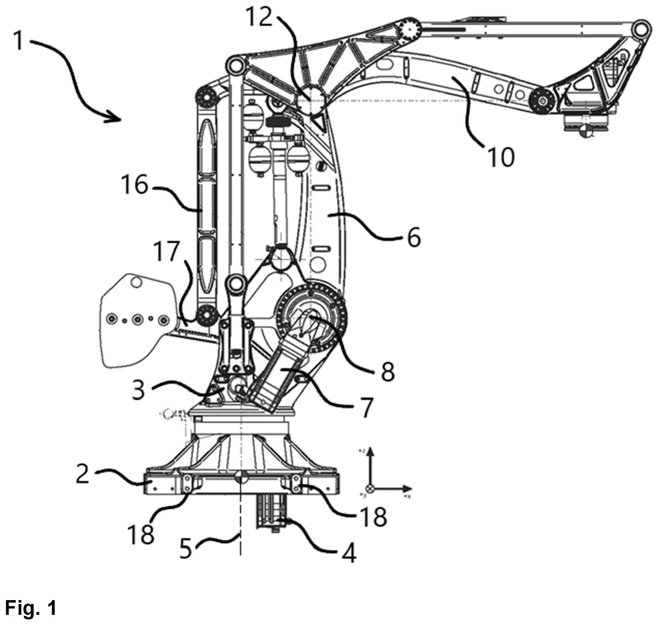

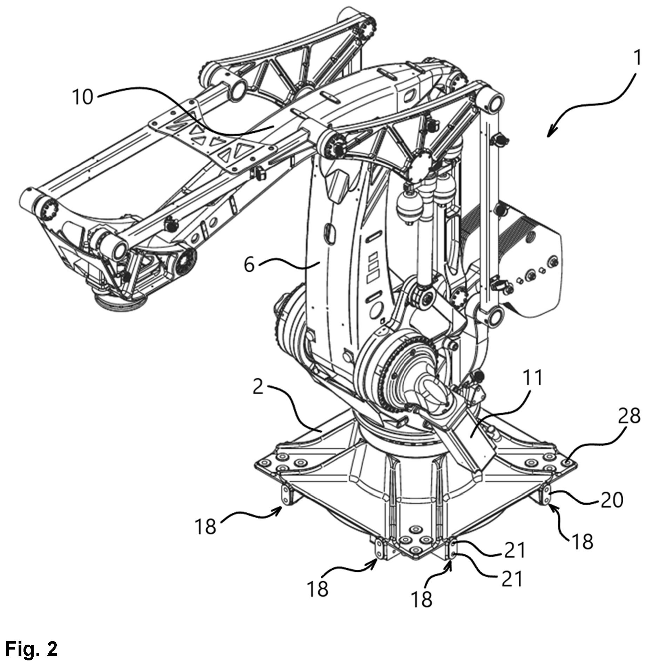

Die Figuren 1 und 2 zeigen einen Industrieroboter 1 mit serieller Kinematik. Diese Kinematik ist an einer Roboterbasis 2 aufgenommen. Sie umfasst ein relativ zu der Roboterbasis 2 drehbares Karussell 3, eine an dem Karussell 3 drehbar aufgenommene Schwinge 6 und einen an der Schwinge drehbar aufgenommenen Armausleger 10 auf. Die Schwinge 6 und der Armausleger 10 haben dabei einen gekrümmten Verlauf. Ein erster Antrieb 4 übt auf das Karussell 3 relativ zu der Roboterbasis 2 ein Drehmoment um eine erste geometrische Antriebsachse 5 aus. Ein zweiter Antrieb 7 übt auf die Schwinge 6 relativ zu dem Karussell 3 ein Drehmoment um eine zweite geometrische Antriebsachse 8 aus. Der zweite Antrieb 7 umfasst einen zweiten Motor und ein zweites Getriebe. Ein dritter Antrieb 11 übt auf den Armausleger 10 relativ zu der Schwinge 6 ein Drehmoment um eine dritte geometrische Antriebsachse 12 aus. Der dritte Antrieb 11 umfasst einen dritten Motor und ein drittes Getriebe. Der zweite Antrieb 7 und der dritte Antrieb 11 sind an dem Karussell 3 angeordnet. Während das Drehmoment des zweiten Antriebs 7 über das als Winkelgetriebe ausgebildete zweite Getriebe direkt auf ein unteres Ende der Schwinge 6 übertragen wird, ist zur Übertragung des Drehmoments des dritten Antriebs 11 auf den Armausleger 10 eine Treibstange 16 vorgesehen, die über einen Hebel 17 mit dem ebenfalls als Winkelgetriebe ausgebildeten dritten Getriebe verbunden ist. Ein oberes Ende der Treibstange 16 ist beweglich mit dem Armausleger 10 verbunden. Der Industrieroboter 1 ist derart aufgestellt, dass die erste geometrische Antriebsachse 5 vertikal verläuft. Die zweite geometrische Antriebsachse 8 und die dritte geometrische Antriebsachse 12 sind parallel zueinander. Sie verlaufen horizontal. Die Schwinge 6 ist derart an dem Karussell 3 aufgenommen, dass sich die erste geometrische Antriebsachse 5 und die zweite geometrische Antriebsachse 8 nicht schneiden. Unter Vernachlässigung des daraus resultierenden Abstands verlaufen die erste geometrischen Antriebsachse 5 und die zweite geometrische Antriebsachse 8 senkrecht zueinander.

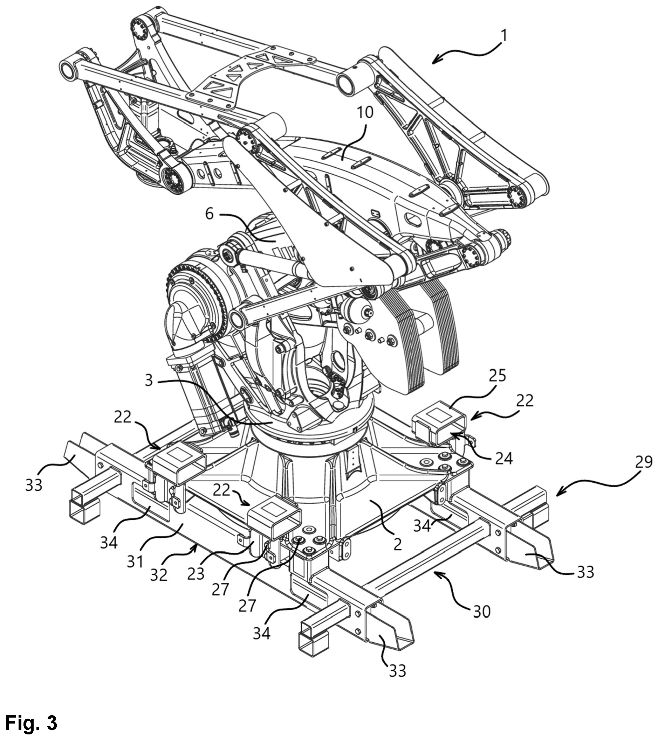

Die Figuren 1 und 2 zeigen den Industrieroboter 1 ohne eine Transporteinrichtung. Das Grundgestell 2 des Industrieroboters 1 ist mit Transporteinrichtungs-Aufnahmen 18 ausgestattet, an denen eine in Figur 3 dargestellte Transporteinrichtung befestigt werden kann. Die Transporteinrichtung umfasst einzelne Transportelemente 22 und ein Transportgestell 29. Jedes der Transportelemente 22 ist einzeln und unabhängig von den anderen Transportelementen 22 und von dem Transportgestell 29 an dem Grundgestell 2 befestigt. Die an dem Grundgestell 2 für die Transportelemente 22 vorgesehenen Transporteinrichtungs-Aufnahmen 18 sind als Sitzflächen 20 ausgebildet. Diese sind parallel zu der ersten geometrischen Achse 5 ausgerichtet und an den Außenseiten des Grundgestells 2 angeordnet. Dabei sind an jeder der vier Außenseiten des viereckigen Grundgestells 2 jeweils zwei Sitzflächen 20 vorgesehen, so dass an jeder Außenseite zwei Transportelemente 22 befestigt werden können. In Figur 3 sind nur an zwei der vier Außenseiten des Grundgestells 2 jeweils zwei Transportelemente 22 angeordnet.

Jede Sitzfläche 20 ist mit zwei Sitzflächen-Durchgangsöffnungen 21 ausgestattet. Jedes Transportelement 22 weist ein Befestigungsteil 23 und ein Gabel-Aufnahmeteil 25, welches die Gabel-Aufnahme 24 ausbildet, auf. Das Befestigungsteil 23 weist einen plattenförmigen Abschnitt mit zwei Durchgangsöffnungen auf, die deckungsgleich zu den Sitzflächen-Durchgangsöffnungen 21 der Sitzfläche angeordnet sind. Die Durchgangsöffnungen des Befestigungsteils werden als Befestigungsteil-Durchgangsöffnungen bezeichnet. Sie sind in der Zeichnung nicht erkennbar. Das Befestigungsteil 23 liegt an der Sitzfläche 20 des Grundgestells 2 derart an, dass die Sitzflächen-Durchgangsöffnungen 21 mit den Befestigungsteil-Durchgangsöffnungen zur Deckung gebracht werden. Durch die Sitzflächen-Durchgangsöffnungen 21 und die Befestigungsteil-Durchgangsöffnungen sind Schrauben 27 eingesetzt, welche jeweils mit einer in der Zeichnung nicht erkennbaren Mutter gesichert sind.

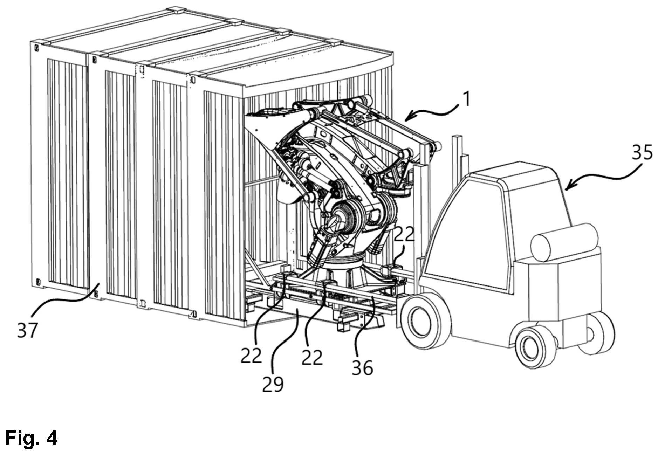

An dem in Figur 3 dargestellten Industrieroboter 1 sind jeweils zwei Transportelemente 22 an zwei gegenüberliegenden Seiten des Grundgestells 2 derart fluchtend angeordnet, dass durch die Gabel-Aufnahmen 24 der Gabel-Aufnahmeteile 25 ein Zinken 36 eines in Figur 4 gezeigten Flurförderzeugs 35 hindurchgeführt werden kann.

Das Transportgestell 29 ist mit Schrauben 27 an dem Grundgestell befestigt. Hierzu sind die Schrauben 27 durch Grundgestell-Durchgangsöffnungen 28 hindurchgeführt, die an dem Grundgestell vorgesehen sind und die sich parallel zu der ersten geometrischen Antriebsachse 5 des Industrieroboters 1 erstrecken. Die Befestigung des Transportgestells 29 ist dabei unabhängig von der Befestigung der Transportelemente 22. Das Transportgestell 29 umfasst einen Rahmen 30, der Profile 31 mit abgerundeten Kanten 32 aufweist. An den nach außen ragenden Spitzen 33 sind die Profile 31 darüber hinaus abgeschrägt. Die abgerundeten Kanten 32 und die abgeschrägten Spitzen 33 erleichtern das Schieben und Ziehen eines mit dem Transportgestell 29 ausgestatteten Industrieroboters 1. Der Rahmen 30 des Transportgestells 29 ist mit Gabel-Aufnahmen 34 ausgestattet, welche als Ausnehmungen in dem Rahmen 30 ausgebildet sind. Die beiden Profile 31 sind parallel zueinander an dem Transportgestell 29 ausgerichtet, so dass je zwei Gabel-Aufnahmen 34 fluchtend zueinander angeordnet sind. Die Gabelaufnahmen 34 an dem Transportgestell 29 sind unter einem Winkel von 90° relativ zu den Gabel-Aufnahmen 24 der Transportelemente 22 ausgerichtet. Damit kann der Industrieroboter 1, welcher mit der Transporteinrichtung aus Transportelementen 22 und Transportgestell 29 ausgestattet ist, von zwei zueinander senkrechten Seiten mit dem Flurförderzeug ausgenommen werden.

Während die Transportelemente 22 an den seitlichen Außenseiten des Grundgestells 2 angeordnet sind, ist das Transportgestell 29 an der Unterseite des Grundgestells 2 befestigt. Das Transportgestell erstreckt sich ausgehend von der Unterseite des Grundgestells 2 so weit nach unten, dass es über den in Figur 1 dargestellten ersten Antrieb 4 übersteht. Dadurch ist der erste Antrieb 4 beim Transport vor Beschädigungen geschützt. Ferner steht das Transportgestell 29 seitlich über das Grundgestell 2 über, so dass das Grundgestell beim Transport ebenfalls geschützt ist.

Figur 3 zeigt darüber hinaus, dass der Industrieroboter 1 für den Transport in einer Transportstellung angeordnet ist. In dieser Transportstellung sind die Schwinge 6 und der Armausleger 10 derart relativ zu dem Karussell 3 ausgerichtet, dass der Industrieroboter 1 möglichst wenig Platz beansprucht.

Figur 4 zeigt wie der mit der Transporteinrichtung gemäß Figur 3 ausgestattete und in Transportstellung angeordnete Industrieroboter 1 mit Hilfe des Flurförderzeugs 35 in einen Versandcontainer 37 verladen wird. Die Transporteinrichtung umfasst Transportelemente 22 und das Transportgestell 29. Die Zinken 36 der Gabel des Flurförderzeugs 35 sind in die Gabel-Aufnahmen der Transportelemente 22 eingeführt. In entsprechender Weise wird der Industrieroboter 1 auch aus dem Versandcontainer entladen. In der Darstellung ist ein Holzrahmen erkennbar, der an den Transportelementen 22 befestigt ist. Er dient dazu, Folien oder Planen für den Transport anzuordnen. Diese Folien oder Planen sind in der Zeichnung nicht dargestellt.

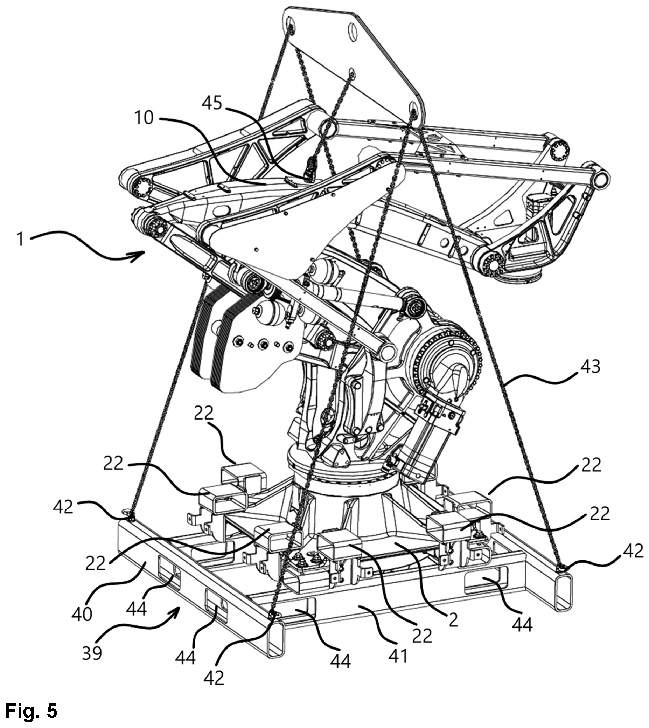

In Figur 5 ist der Industrieroboter 1 mit einem zweiten Ausführungsbeispiel einer Transporteinrichtung dargestellt. Im Unterschied zu den Figuren 3 und 4 ist der Industrieroboter 1 mit insgesamt acht Transportelementen 22 ausgestattet, von denen in der Zeichnung nur sechs erkennbar sind. Die restlichen beiden Transportelemente sind durch den Industrieroboter 1 verdeckt. Jeweils zwei Transportelemente 22 an jeder der vier Außenseiten des Grundgestells 2 befestigt. Darüber hinaus ist der Industrieroboter 1 mit einem Transportgestell 39 ausgestattet, das einen Rahmen 40 mit abgerundeten Profilen 41 aufweist, wobei die Profile 41 mit vier Kranketten-Aufnahmen 42 versehen sind. In diese Kranketten-Aufnahmen wird eine Krankette 43 eingehängt. Das Transportgestell 39 ist darüber hinaus mit Gabel-Aufnahmen 44 ausgestattet, die als Ausnehmungen in dem Rahmen 40 ausgebildet sind. Der Rahmen 40 weist insgesamt acht Gabel-Aufnahmen 44 auf, die unter einem Winkel von 90° relativ zueinander ausgerichtet sind. In der Darstellung sind nur sechs erkennbar. Die restlichen sind verdeckt. Der Industrieroboter 1 ist an dem Armausleger 10 mit einer zusätzlichen Kranketten-Aufnahme 45 ausgestattet. Zum Schutz vor einem Abkippen des Industrieroboters 1 wird in diese Kranketten-Aufnahme 45 eine weitere Krankette eingehängt. Die Krankette 43 kann an einem Kran eingehängt werden. Diese ist in der Zeichnung nicht dargestellt.

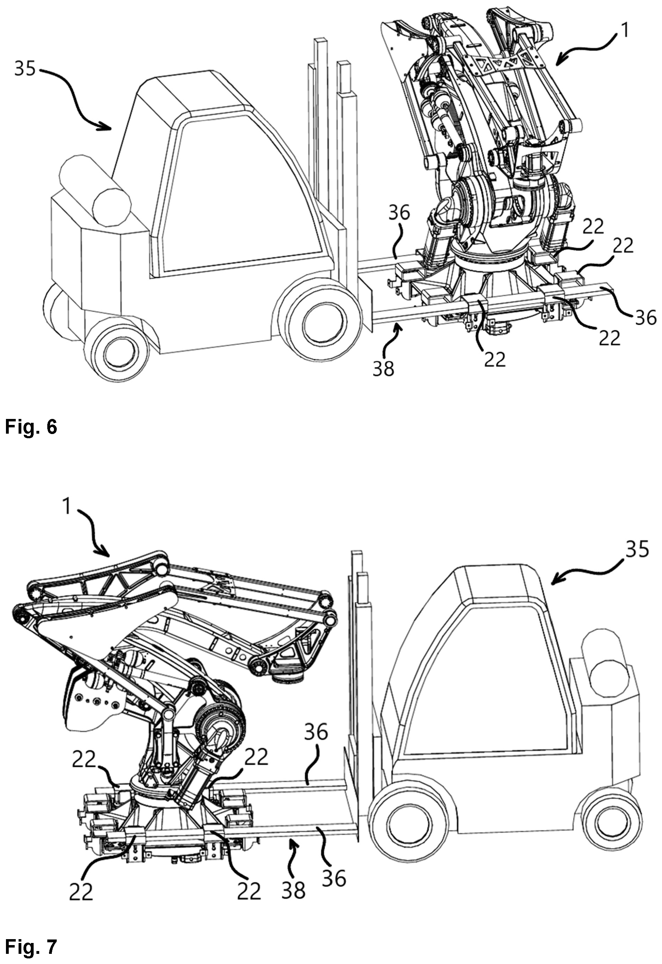

Die Figuren 6 und 7 zeigen den Industrieroboter 1 mit insgesamt acht Transportelementen 22, wobei der Industrieroboter von dem Flurförderzeug 35 unter zwei verschiedenen Ausrichtungen aufgenommen ist. Hierzu ist die Gabel 38 des Flurförderzeugs 35 in zwei verschiedenen Richtungen in die Transportelemente 22 eingeführt. In Figur 6 sind die Zinken 36 der Gabel 38 in insgesamt vier Transportelementen 22 angeordnet, die an zwei gegenüberliegenden Außenseiten des Grundgestells 2 befestigt sind. In Figur 7 sind die Zinken 36 der Gabel 38 in den anderen vier Transportelementen 22 angeordnet, die an den beiden übrigen parallelen Außenseiten des Grundgestells 2 befestigt sind. Da die Außenseiten des Grundgestells senkrecht zueinander sind, ist die Ausrichtung, unter der die Gabel des Flurförderzeugs 35 in Figur 6 den Industrieroboter 1 aufnimmt, senkrecht zu der Ausrichtung, unter der die Gabel des Flurförderzeug 35 in Figur 7 den Industrieroboter 1 aufnimmt.

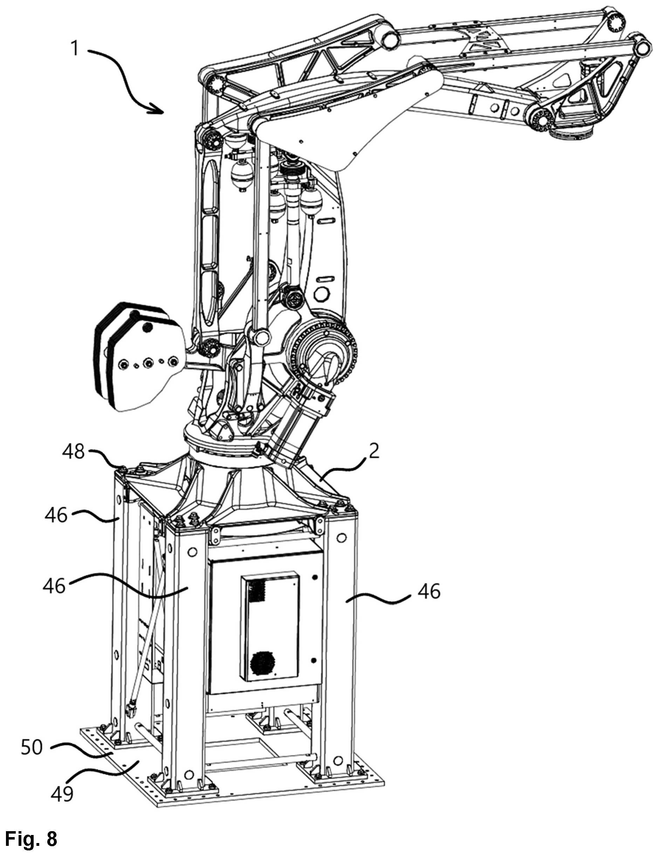

In den Figuren 6 und 7 ist der Industrieroboter 1 ohne das in den Figuren 3, 4 und 5 gezeigte Transportgestell dargestellt. Zum Entfernen des Transportgestells wird der Industrieroboter 1 mit dem Flurförderzeug 35, wie in den Figuren 6 und 7 dargestellt, angehoben, wobei die Gabel des Flurförderzeugs in die Transportelemente 22 eingeführt ist. Anschließend kann der Industrieroboter 1 mit dem Flurförderzeug 35 auf Gestellfüßen gemäß Figur 8 abgesetzt werden.

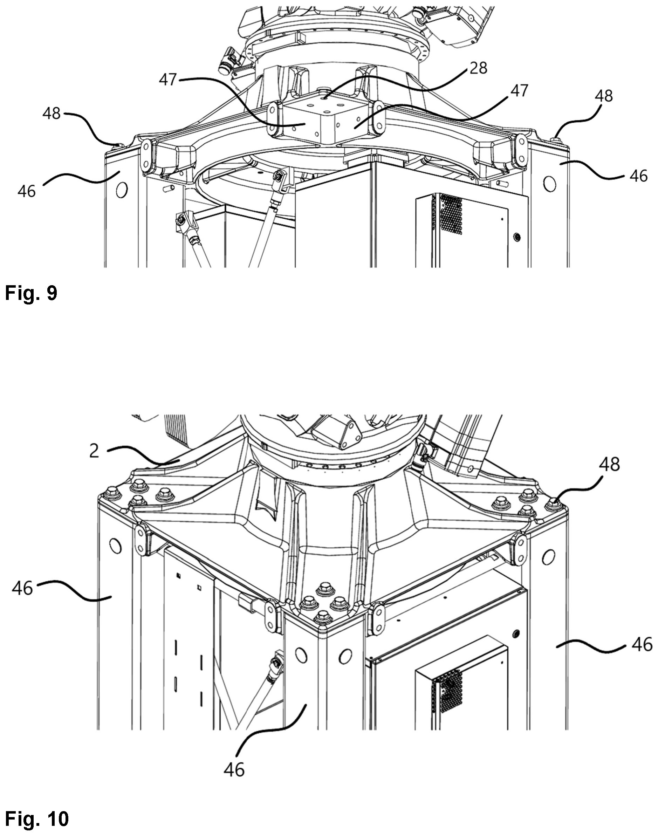

Figur 8 zeigt den Industrieroboter 1 nach seiner Installation auf vier Gestellfüßen 46. Diese bilden einen Sockel für den Industrieroboter. Die Figuren 9 und 10 zeigen wie die Gestellfüße 46 an dem Grundgestell 2 des Industrieroboters 1 befestigt sind. An den vier äußeren Ecken des Grundgestells 2 sind jeweils vier Grundgestell-Durchgangsöffnungen 28 vorgesehen. Diese Grundgestell-Durchgangsöffnungen 28 dienen sowohl der Befestigung des Transportgestells 29 in Figur 3 oder des Transportgestells 39 in Figur 5 als auch der Befestigung der Gestellfüße 46. Zur Stabilisierung und Positionierung der Gestellfüße 46 ist das Grundgestell 2 mit Positionierungs-Elementen 47 ausgestattet. Ein Gestellfuß 46 liegt an jeweils zwei Positionierungs-Elementen 47 an. Als Gestellfuß-Befestigungseinrichtungen 48 dienen Schrauben, die von oben durch die Grundgestell-Durchgangsöffnungen 28 eingeführt und mit den Gestellfüßen 46 verschraubt werden.

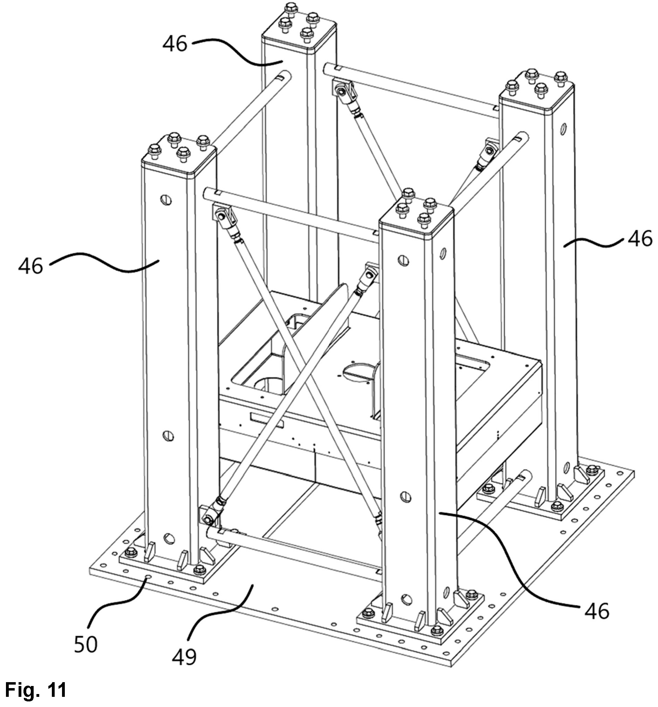

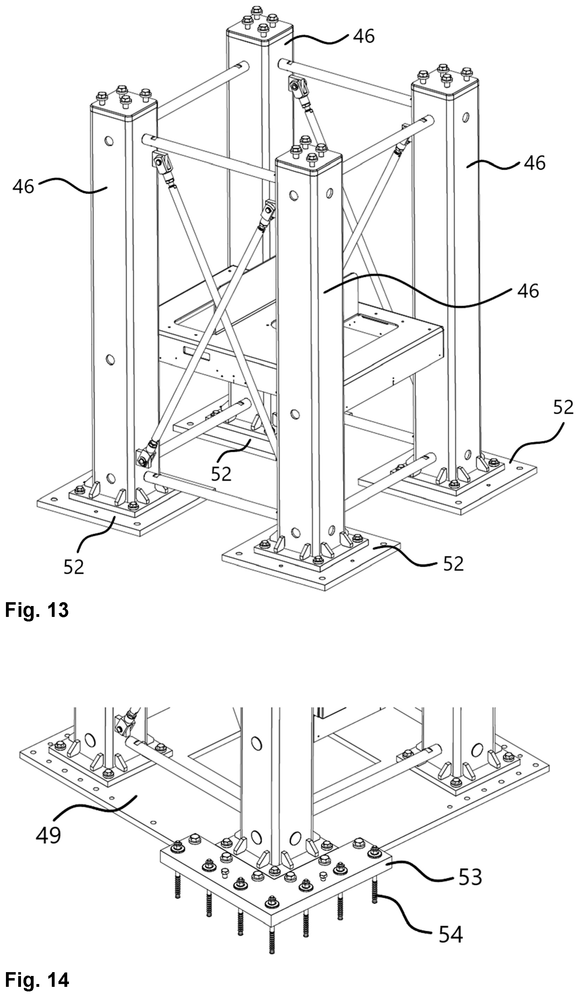

An der dem Grundgestell 2 abgewandten Seite sind die Gestellfüße 46 mit einer Bodenplatte 49 verbunden. Figur 11 zeigt die vier Gestellfüße 46 mit einer gemeinsamen Bodenplatte 49. Jeder Gestellfuß 46 ist mit der Bodenplatte 49 verschraubt. Die Bodenplatte 49 weist eine Vielzahl an Bodenplatten-Durchgangsöffnungen 50 auf, in die Ankerstangen zum Verankern des Industrieroboters im Boden eingesetzt werden. Diese Ankerstangen sind in Figur 14 dargestellt.

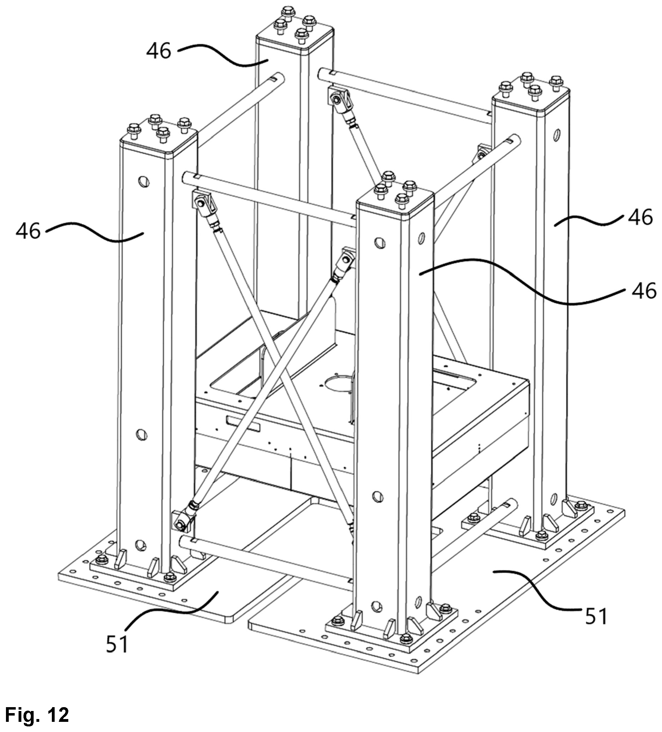

Alternativ zu einer gemeinsamen Bodenplatte, an der alle vier Gestellfüße 46 befestigt sind, können zwei Bodenplatten 51 vorgesehen sein, wobei an jeder Bodenplatte 51 zwei Gestellfüße befestigt sind. Dies in ist Figur 12 dargestellt. Ein drittes Ausführungsbeispiel zeigt Figur 13: für jeden Gestellfuß 46 ist eine separate Bodenplatte 52 vorgesehen.

In Figur 14 ist die Verankerung des Industrieroboters mit Hilfe eines L-förmigen Winkelstücks 53 in einem Boden dargestellt. Hierzu wird das L-förmige Winkelstück 53 mit der Bodenplatte verschraubt und darüber hinaus mit Ankerstangen 54 in dem Boden verankert. Diese Befestigung am Boden kann insbesondere dann vorgenommen werden, wenn im Boden bereits Bohrungen vorgesehen sind, die nicht mit den Bodenplatten-Durchgangsöffnungen 50 übereinstimmen, beispielsweise aufgrund von Fehlbohrungen.

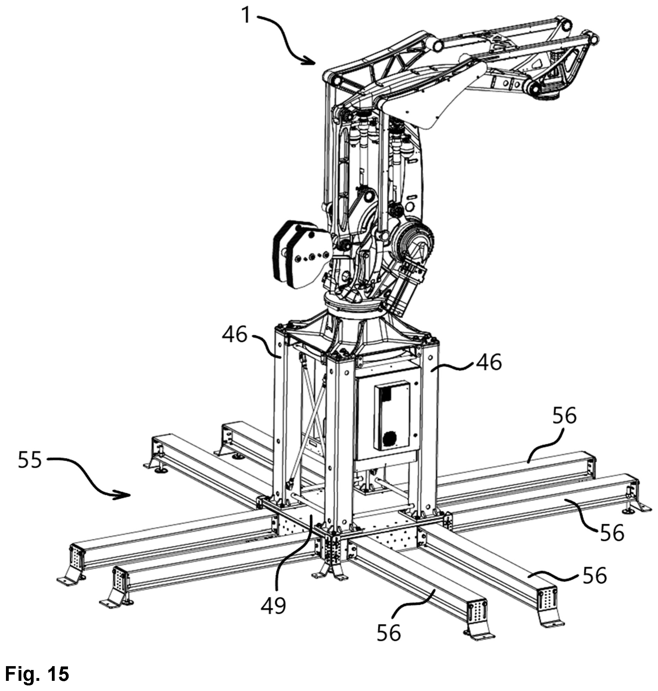

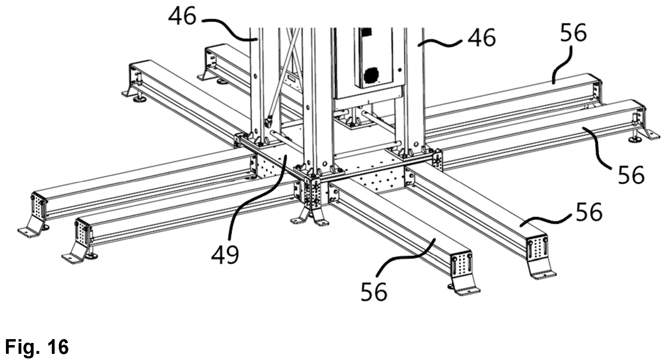

In den Figuren 15 und 16 ist die Verankerung des Industrieroboters 1 mit Hilfe eines Bodenrahmens 55 dargestellt. Der Bodenrahmen umfasst vier Bodenprofile 56, von denen jeweils zwei parallel zueinander sind. Ein erstes Paar paralleler Bodenprofile 56 ist dabei über Kreuz zu einem zweiten Paar Bodenprofile 56 angeordnet. An dem Bodenrahmen ist die Bodenplatte 49 befestigt, an der entsprechend zu den Figuren 8 und 11 die vier Gestellfüße 46 angeordnet sind. Der Bodenrahmen 55 erstreckt sich über eine wesentlich größere Grundfläche als die Bodenplatte 49. Der Bodenrahmen wird an mehreren Positionen über Ankerstangen in dem Boden verankert. Diese sind in den Figuren 15 und 16 nicht dargestellt. Aufgrund der Ausdehnung des Bodenrahmens können die Ankerstangen kürzer sein als die in Figur 14 dargestellten Ankerstangen 54.

Sämtliche Merkmale der Erfindung können sowohl einzeln als auch in beliebiger Kombination miteinander erfindungswesentlich sein.

### Bezugszahlen

- 1: Industrieroboter
- 2: Grundgestell
- 3: Karussell
- 4: Erster Antrieb
- 5: Erste geometrische Antriebsachse
- 6: Schwinge
- 7: Zweiter Antrieb
- 8: Zweite geometrische Antriebsachse
- 10: Armausleger
- 11: Dritter Antrieb
- 12: Dritte geometrische Antriebsachse
- 16: Treibstange
- 17: Hebel
- 18: Transporteinrichtungs-Aufnahmen
- 20: Sitzfläche
- 21: Sitzflächen-Durchgangsöffnung
- 22: Transportelement
- 23: Befestigungsteil
- 24: Gabel-Aufnahme
- 25: Gabel-Aufnahmeteil
- 27: Schraube
- 28: Grundgestell-Durchgangsöffnung
- 29: Transportgestell
- 30: Rahmen
- 31: Profil
- 32: Abgerundete Kante
- 33: Spitze des Profils
- 34: Gabel-Aufnahme am Transportgestell
- 35: Flurförderzeug
- 36: Zinken der Gabel des Flurförderzeugs
- 37: Versandcontainer
- 38: Gabel
- 39: Transportgestell
- 40: Rahmen
- 41: Profil
- 42: Kranketten-Aufnahme an der Transporteinrichtung
- 43: Krankette
- 44: Gabel-Aufnahme am Transportgestell
- 45: Zusätzliche Kranketten-Aufnahme an der Kinematik
- 46: Gestellfuß
- 47: Positionierungs-Element
- 48: Gestellfuß-Befestigungseinrichtung
- 49: Bodenplatte
- 50: Bodenplatten-Durchgangsöffnung
- 51: Bodenplatte
- 52: Bodenplatte
- 53: L-förmiges Winkelstück
- 54: Ankerstange
- 55: Bodenrahmen
- 56: Bodenprofil

## Patentansprüche

1. Industrieroboter (1)
mit einer seriellen Kinematik, welche für eine große Traglast ausgebildet ist,
mit einem an einem Grundgestell (2) um eine erste geometrische Achse (5) drehbar aufgenommenen Karussell (3),
mit einer an dem Karussell (3) um eine zweite geometrische Achse (8) drehbar aufgenommenen Schwinge (6),
mit einem an der Schwinge (6) um eine dritte geometrische Achse (12) drehbar aufgenommenen Armausleger (10),
mit einer Transporteinrichtung (22, 29) für den Industrieroboter (1), welche mehrere Gabel-Aufnahmen (24, 34) für eine Gabel (38) eines Flurförderzeugs (35) aufweist,
wobei das Grundgestell (2) mit mehreren Transporteinrichtungs-Aufnahmen (18, 28) ausgestattet ist, welche ausgebildet sind, die Transporteinrichtung (22, 29) mittels mindestens einer Befestigungseinrichtung (27) lösbar an dem Grundgestell (2) zu befestigen, wobei die Gabel-Aufnahmen (24, 34) der an dem Grundgestell (2) befestigten Transporteinrichtung (22, 29) derart ausgerichtet sind, dass die Transporteinrichtung (22, 29) von mindestens zwei Seiten mit dem Flurförderzeug (35) aufnehmbar ist und die zwei Seiten unter einem Winkel von mehr als 0° und weniger als 180°, bevorzugt unter einem Winkel von 90°, zueinander ausgerichtet sind.

2. Industrieroboter nach Anspruch 1, **dadurch gekennzeichnet, dass** die Transporteinrichtungsaufnahmen (18) als Sitzflächen (20) ausgebildet sind, die sich in Richtung der ersten geometrischen Achse (5) erstecken, und dass die Sitzflächen (20) an einer Außenseite des Grundgestells (2) angeordnet sind.

3. Industrieroboter nach Anspruch 2, **dadurch gekennzeichnet, dass** die Sitzflächen (20) an vier Außenseiten des Grundgestells (2) angeordnet sind, von denen jeweils zwei Außenseiten parallel zueinander sind.

4. Industrieroboter nach Anspruch 3, **dadurch gekennzeichnet, dass** an jeder Außenseite mindestens zwei Sitzflächen (20) angeordnet sind.

5. Industrieroboter nach Anspruch 2, 3 oder 4, **dadurch gekennzeichnet, dass** jede Sitzfläche (20) mindestens eine Sitzflächen-Durchgangsöffnung (21) aufweist, welche mindestens eine die Transporteinrichtung (22) an dem Grundgestell (2) befestigende Schraube (27) aufnimmt.

6. Industrieroboter nach Anspruch 5, **dadurch gekennzeichnet, dass** die Transporteinrichtung mehrere Transportelemente (22) umfasst, dass jedes Transportelement (20) ein Befestigungsteil (23) mit einem plattenförmigen Abschnitt aufweist, welches bei Befestigung des Transportelements (22) an dem Grundgestell (2) an einer der Sitzflächen (20) des Grundgestells (2) anliegt, dass das Befestigungsteil (23) mindestens eine Befestigungsteil-Durchgangsöffnung aufweist, welche mindestens eine in die Sitzflächen-Durchgangsöffnung (21) eingesetzte und das Transportelement (22) an dem Grundgestell (2) befestigende Schraube (27) aufnimmt, und dass jedes Transportelement (22) ein an dem Befestigungsteil (23) angeordnetes Gabel-Aufnahmeteil (25) aufweist, welches die Gabel-Aufnahme (24) umfasst.

7. Industrieroboter nach Anspruch 6, **dadurch gekennzeichnet, dass** das Gabel-Aufnahmeteil (25) als Vierkantrohr ausgebildet ist.

8. Industrieroboter nach einem der vorhergehenden Ansprüche, **dadurch gekennzeichnet, dass** die Transporteinrichtungs-Aufnahmen an dem Grundgestell (2) mindestens eine Grundgestell-Durchgangsöffnung (28) umfassen, welche sich parallel zur ersten geometrischen Achse (5) erstreckt, und dass die Grundgestell-Durchgangsöffnung (28) mindestens eine die Transporteinrichtung (29) an dem Grundgestell (2) befestigende Schraube (27) aufnimmt.

9. Industrieroboter nach einem der vorhergehenden Ansprüche, **dadurch gekennzeichnet, dass** die Transporteinrichtung ein Transportgestell (29) mit einem Rahmen (30) aufweist.

10. Industrieroboter nach Anspruch 9, **dadurch gekennzeichnet, dass** das Transportgestell (29) an der dem Grundgestell (2) abgewandten Seite mit Profilen (31) ausgestattet ist, die abgerundete Kanten (32) aufweisen.

11. Industrieroboter nach Anspruch 9 oder 10, **dadurch gekennzeichnet, dass** das an dem Grundgestell (2) befestigte Transportgestell (29) seitlich über das Grundgestell (2) übersteht.

12. Industrieroboter nach Anspruch 9, 10 oder 11, **dadurch gekennzeichnet, dass** das Transportgestell (29) in Richtung der ersten geometrischen Achse (5) über das Grundgestell (2) weiter übersteht als ein Antrieb (4), der das Karussell (3) um die erste geometrische Achse (5) antreibt.

13. Industrieroboter nach einem der Ansprüche 9 bis 12, **dadurch gekennzeichnet, dass** die Transporteinrichtung (22, 29) über die Befestigungseinrichtung (27) derart lösbar mit dem Grundgestell (2) verbunden ist, dass die Kinematik bei gelöster Befestigungseinrichtung (27) am Stück von der Transporteinrichtung (22, 29) abnehmbar ist.

14. Industrieroboter nach einem der vorhergehenden Ansprüche, **dadurch gekennzeichnet, dass** die Transporteinrichtung (29) mit Kranketten-Aufnahmen (42) ausgestattet ist, welche Kranketten (43) oder Seile einer Kranaufhängung aufnehmen.

15. Industrieroboter nach Anspruch 14, **dadurch gekennzeichnet, dass** die Kinematik mit einer zusätzlichen Kranketten-Aufnahme (45) ausgestattet ist, welche als Kippschutz ausgebildet ist.

16. Industrieroboter nach einem der vorhergehenden Ansprüche, **dadurch gekennzeichnet, dass** das Grundgestell (2) mit Gestellfuß-Befestigungseinrichtungen (48) ausgestattet ist, an welchen mindestens vier Gestellfüße (46) jeweils einzeln oder in Kombination befestigbar sind.

17. Industrieroboter nach Anspruch 16, **dadurch gekennzeichnet, dass** die Gestellfüße (46) mit mindestens einer Bodenplatte (49, 51, 52) ausgestattet sind, derart, dass an jedem Gestellfuß (46) eine separate Bodenplatte (52) angeordnet ist oder dass an zwei Gestellfüßen (46) eine gemeinsame Bodenplatte (51) angeordnet ist oder dass alle Gestellfüße (46) an einer gemeinsamen Bodenplatte (49) angeordnet sind.

18. Industrieroboter nach Anspruch 17, **dadurch gekennzeichnet, dass** die Bodenplatten (49, 51,52) über Ankerstangen (54) in einem Untergrund festlegbar sind.

19. Industrieroboter nach Anspruch 17, **dadurch gekennzeichnet, dass** mindestens eine Bodenplatte über ein L-förmiges Winkelstück und Ankerstangen in einem Untergrund festlegbar ist, wobei die Bodenplatte (49) mit dem L-förmigen Winkelstück (53) verschraubt ist und das L-förmige Winkelstück (53) mit den Ankerstangen (54) in dem Untergrund festgelegt ist.

20. Industrieroboter nach einem der Ansprüche 1 bis 17, **dadurch gekennzeichnet, dass** er an einem Bodenrahmen (55) befestigt ist, welcher in einem Untergrund festlegbar ist, und dass der Bodenrahmen (55) die Gewichtskraft des Industrieroboters (1) einschließlich der an dem Industrieroboter (1) angeordneten Traglast auf eine durch die Größe des Bodenrahmens (55) vorgegebene Fläche verteilt, welche größer ist als eine Grundfläche des Grundgestells (2).
